# EUROPEAN PATENT APPLICATION

(11) **EP 4 851 736 A1**
(43) Date of publication of application: **09.12.2026**
(21) Application number: 26180695.4
(22) Date of filing: 22.05.2026
(51) Int. Cl.: G05B 19/05, G05B 19/418, G06F 3/14, H04L 69/08

(54) **DATA RELAY DEVICE, METHOD, AND PROGRAM**

(30) Priority: 05.06.2025 JP 2025094133
(71) Applicant: OMRON Corporation, Kyoto-shi, Kyoto 600-8530 (JP)
(72) Inventor: YONEDA, Mitsuhiro, Kyoto-shi, 600-8530 (JP); FERRE, Franz, Kyoto-shi, 600-8530 (JP)
(74) Representative: Mewburn Ellis LLP

(57) **Abstract**

A data relay device (300, 10D) of an FA system (1000) includes an interface for communication with a controller (100) that executes a user program that relates to control of one or more pieces of equipment (5) connected to a network (3) of the system, a processing portion (320) that performs at least one of relay, collection, processing, or output of data that is transferred over the network, includes process data of the equipment, and relates to control, in accordance with setting (340) of communication between the controller and the one or more pieces of equipment (5), and a generator (330) that generates, based on the setting of communication, structure information that can be referred to in creation of the user program and includes information on the setting of communication.

## Description

### CROSS REFERENCE TO RELATED APPLICATIONS

This nonprovisional application is based on Japanese Patent Application No. 2025-094133 filed with the Japan Patent Office on June 5, 2025, the entire contents of which are hereby incorporated by reference.

### BACKGROUND OF THE INVENTION

### Field of the Invention

The present disclosure relates to a technique to relay data for factory automation (FA).

### Description of the Background Art

For example, Japanese Patent Laying-Open No. 2021-117569 discloses a technique to collect information of a sensor and to view the collected information at an external computer in a system where a programmable logic controller (PLC) exchanges information with the sensor over an industrial network.

### SUMMARY OF THE INVENTION

Setting of equipment such as a PLC or a sensor provided in a production line of an FA system is made by using dedicated software. A format of data transferred by the equipment is generally different between pieces of equipment. Therefore, when the equipment is communicatively connected to equipment, a designer has had to perform operations to interpret the difference and to secure compatibility of setting involved with communication for each piece of equipment. As a scale of the FA system is larger, an amount of setting of the equipment is larger and an amount of operations for setting of communicative connection between pieces of equipment with compatibility being secured is also larger. Japanese Patent Laying-Open No. 2021-117569 fails to propose a technique to solve these problems.

Therefore, facilitation of communicative connection between pieces of equipment with compatibility of setting involved with communication at each piece of equipment being secured is demanded.

A device that relays data in a factory automation (FA) system according to the present disclosure includes an interface for communication with a controller that executes a user program that relates to control of one or more pieces of equipment connected to a network of the FA system, a processing portion that performs at least one of relay, collection, processing, or output of data that is transferred over the network, includes process data of the equipment, and relates to the control, in accordance with setting of communication between the controller and the one or more pieces of equipment, and a generator that performs processing for generating structure information that can be referred to in creation of the user program and includes information on the setting of communication, based on the setting of communication.

According to the disclosure described above, structure information is generated (designed) in accordance with setting of communication between one or more pieces of equipment and the controller, and the user program to be executed by the controller is created by referring to such structure information. Therefore, as the user program is executed, for the one or more pieces of equipment that transfer data to the network, communication is performed in accordance with the setting of communication between each piece of equipment and the controller, and hence communication with compatibility involved with setting of communication between pieces of equipment being secured can be achieved.

In the disclosure described above, the data relay device includes a Web server that implements at least one of the processing portion or the generator.

According to the disclosure described above, a general computer (an information processing apparatus) can conveniently be connected to the data relay device, because the general computer such as a tablet terminal supports a Web browser. Therefore, it is not necessary to install a dedicated tool or the like which is not a Web server in the information processing apparatus.

In the disclosure described above, the Web server communicates with a Web browser, and the processing performed by the generator includes generation of a command that causes the Web browser to generate the structure information that can be referred to in creation of the user program and includes information on the setting of communication, based on the setting of communication.

According to the disclosure described above, the Web server can generate a command to cause the Web browser to generate the structure information.

In the disclosure described above, the data relay device communicates data in accordance with a first communication protocol, with the controller through the interface, each piece of equipment transfers data in accordance with a second communication protocol over the network, and the setting of communication includes setting based on the first communication protocol and setting based on the second communication protocol.

According to the disclosure described above, setting of communication can include setting based on the first communication protocol between the data relay device and the controller and setting based on the second communication protocol between the data relay device and equipment.

In the disclosure described above, the setting based on the first communication protocol includes a first format of data communicated in the first communication protocol and the setting based on the second communication protocol includes a second format of data communicated in the second communication protocol.

According to the disclosure described above, setting of communication can include setting based on the first format of data communicated in the first communication protocol and the second format of data communicated in the second communication protocol.

In the disclosure described above, the data relay device further includes one or more ports, the one or more ports are configured to communicate with the one or more pieces of equipment over the network, and the structure information includes information of the first format of data transferred between the data relay device and the controller, and includes, for each of the one or more pieces of equipment connected to the one or more ports, information of the second format of data transferred by the equipment over the network.

According to the disclosure described above, for the equipment connected to each port of the data relay device, information on a format specific to the equipment, that is, the second format of the data transferred by the equipment over the network, can be included.

In the disclosure described above, the information of the first format or the information of the second format includes a size of data and an identifier of the data, or the information of the first format or the information of the second format includes a configuration including the size of the data and the identifier of the data.

According to the disclosure described above, the structure information can be generated based on setting of communication including information on the format including the size of the data or the identifier of the data or the configuration of the data.

In the disclosure described above, the first communication protocol includes a tag data link and the second communication protocol includes an IO-Link.

According to the disclosure described above, the structure information can be generated based on setting of communication including information on different communication protocols which are the tag data link and the IO-Link.

In the disclosure described above, the structure information includes extensible markup language (XML) information described in the XML, and in creation of the user program, a structure type to be referred to by the user program executed in the controller is generated from the XML information.

According to the disclosure described above, the structure type can be generated from the XML information included in the structure information, as one of data types referred to by the user program, in creation of the user program.

In the disclosure described above, a member variable that configures the structure type includes a member variable of an array type and the array type defines an array that has data to be transferred over the network by each of the one or more pieces of equipment as an element.

According to the disclosure described above, by using the member variable of the array type that the structure type has, data transferred over the network can be handled as the array in the user program.

In the disclosure described above, the generator generates a function that receives a variable of the structure type as input.

In the disclosure described above, the generator generates a function that receives a variable of the structure type as input and outputs data set to one or more member variables of the variable of the structure type.

According to the disclosure described above, an environment for generation of a function that receives the variable of the structure type as input can be provided. Among a plurality of variables of the structure type generated from the structure information, for example, for only one or more member variables designated by a user, a function for obtaining data set to the designated member variables can be provided to an environment for development (design) of the user program.

In the disclosure described above, the generator assigns to the structure information, an identifier that allows distinction from another piece of the structure information.

According to the disclosure described above, even when a plurality of pieces of structure information are generated, one piece of structure information can be distinguished from another piece of structure information. Therefore, in creation of the user program, a plurality of structure types generated from the plurality of pieces of structure information can be handled as being distinguished from each other.

In the disclosure described above, when a port to which a relay that connects a plurality of pieces of equipment is connected is detected from among the one or more ports, the generator generates the structure information to have a nested structure. The nested structure represents structure information which is generated by the generator based on setting of communication between the controller and each piece of equipment connected to the relay and can be referred to in creation of the user program.

According to the disclosure described above, for topology in which a relay to which a plurality of pieces of equipment are connected is connected to the port of the data relay device, the structure information having a nested structure is generated. The generator can thus generate, for all of pieces of equipment directly connected to the port of the data relay device and equipment connected to that port with the relay being interposed, the structure information based on setting of communication of the all of pieces of equipment.

In the disclosure described above, the setting of communication includes setting for specifying data of at least one piece of equipment with which the controller exchanges the data, among the one or more pieces of equipment.

According to the disclosure described above, for example, when the user specifies data of the at least one piece of equipment, with designation of the data specified by the user being defined as setting of communication, the structure information based on the setting of communication can be generated. Therefore, the user program created by referring to such structure information can be provided as a program that allows processing (relay, collection, output, or the like) of data designated by the user.

In the disclosure described above, the data relay device further includes means for performing transfer processing for transferring a frame to the controller, a plurality of ports configured such that the equipment is connectable thereto over the network, and means for detecting, for each port, change of equipment connected to that port to another piece of equipment. Each field that configures the frame is associated in prescribed one-to-one relation with a port to which equipment that transfers data to be stored in the field is connected and each field that configures the frame is associated in one-to-one relation with a member variable that configures the structure type, for which data stored in the field is set. The transfer processing described above includes specifying, when the change is detected, a port to which the another piece of equipment has been connected before detection of the change and storing data transferred from the another piece of equipment to the port at which the change has been detected, in the field of the frame associated with the specified port in the prescribed relation.

According to the disclosure described above, even when the port to which equipment is connected is changed, storage of data from that equipment in a field within a frame associated with the port before change of the equipment is guaranteed based on the prescribed relation. Therefore, even when the port to which equipment is connected is changed (that is, the port to which equipment is connected is changed from a certain port (previously set port) to another port), change of the structure information to be referred to in creation of the user program is not required.

In the disclosure described above, the data relay device further includes a storage where the structure information that can be referred to in creation of the user program is stored, a plurality of ports configured such that the equipment is connectable thereto over the network, means for obtaining, for each of the one or more ports to which the equipment is connected among the plurality of ports, an identifier of the equipment, and means for detecting, for at least one port of the plurality of ports, change of equipment connected to that port to another piece of equipment. The structure information stored in the storage includes, in association with each of the one or more ports, an identifier of the equipment obtained for that port. When the change is detected, the data relay device specifies a port to which the another piece of equipment has been connected before detection of the change and changes the structure information stored in the storage in such a manner that an identifier of the another piece of equipment is associated with the specified port.

According to the disclosure described above, in connection with equipment, even when the port to which the equipment is connected is changed, original association between the port and the identifier of the equipment can be maintained in the structure information.

A method according to the present disclosure is a method of relaying data in a factory automation (FA) system, and the method includes communicating with a controller that executes a user program that relates to control of one or more pieces of equipment connected to a network of the FA system, performing at least one of relay, collection, processing, or output of data that is transferred over the network, includes process data of the equipment, and relates to the control, in accordance with setting of communication between the controller and the one or more pieces of equipment, and performing processing for generating structure information that can be referred to in creation of the user program and includes information on the setting of communication, based on the setting of communication.

A program according to the present disclosure is a program that causes a computer that relays data in a factory automation (FA) system to perform communicating with a controller that executes a user program that relates to control of one or more pieces of equipment connected to a network of the FA system, performing at least one of relay, collection, processing, or output of data that is transferred over the network, includes process data of the equipment, and relates to the control, in accordance with setting of communication between the controller and the one or more pieces of equipment, and performing processing for generating structure information that can be referred to in creation of the user program and includes information on the setting of communication, based on the setting of communication.

The foregoing and other objects, features, aspects, and advantages of this invention will become more apparent from the following detailed description of this invention when taken in conjunction with the accompanying drawings.

### BRIEF DESCRIPTION OF THE DRAWINGS

Fig. 1 is a diagram for schematically illustrating an application of the present disclosure.
Fig. 2 is a diagram schematically showing a network configuration of a system according to the present embodiment.
Fig. 3 is a schematic diagram showing a hardware configuration of a CPU unit of a controller according to the present embodiment.
Fig. 4 is a schematic diagram showing an exemplary hardware configuration of a support apparatus according to the embodiment.
Fig. 5 is a schematic diagram showing an exemplary hardware configuration of an IO-Link master according to the embodiment.
Fig. 6 is a diagram illustrating refresh according to the present embodiment.
Fig. 7 is a diagram schematically showing relation between connection of a sensor and a data structure according to the present embodiment.
Fig. 8 is a diagram schematically showing definition of a structure type according to the present embodiment.
Fig. 9 is a diagram schematically showing a sequence according to the present embodiment.
Fig. 10 is a diagram showing an exemplary screen that shows sensor data according to the present embodiment.
Fig. 11 is a diagram schematically showing generation of a FUN according to the present embodiment.
Figs. 12 and 13 are each a diagram illustrating a rule for naming a structure type according to the present embodiment.
Fig. 14 is a diagram showing another exemplary structure information according to the present embodiment.
Fig. 15 is a diagram schematically showing change of a connection configuration of the sensor according to the present embodiment.
Fig. 16 is a flowchart of processing for detecting the connection configuration of the sensor according to the present embodiment.
Fig. 17 is a diagram schematically showing a configuration in which a data collection unit is connected to the controller according to the present embodiment.
Fig. 18 is a diagram schematically showing a sequence of processing in the data collection unit according to the present embodiment.
Fig. 19 is a diagram showing another sequence of generation of the structure information according to the present embodiment.
Figs. 20 and 21 are each a diagram showing an exemplary UI screen for setting according to the present embodiment.
Fig. 22 is a diagram schematically showing a configuration for realizing the processing in Fig. 16.

### DESCRIPTION OF THE PREFERRED EMBODIMENTS

An embodiment of the present disclosure will be described in detail with reference to the drawings. The same or corresponding elements in the drawings have the same reference characters allotted and description thereof will not be repeated.

### <§. Application>

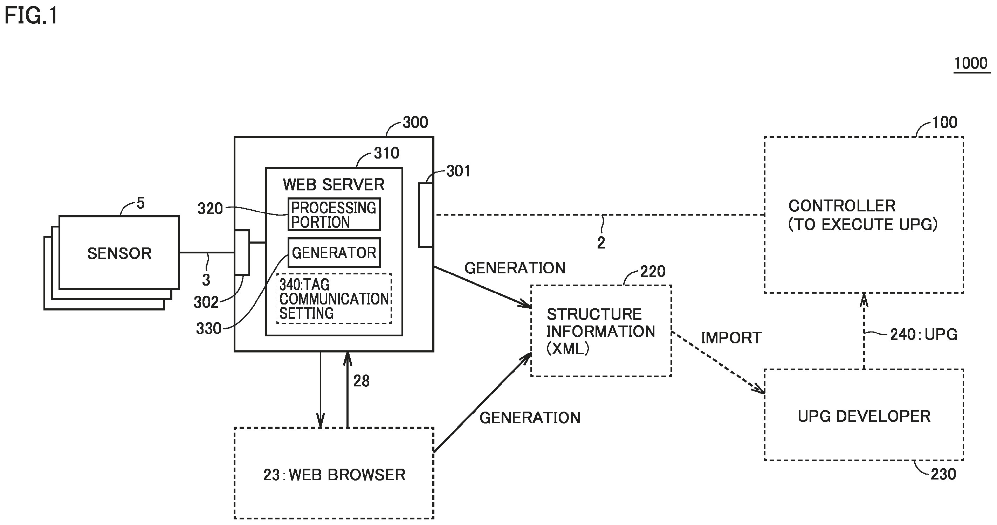

An exemplary scene to which the present invention is applied will initially be described. In the present disclosure, "IO" means "input" or "output" or "input and output." Fig. 1 is a diagram for schematically illustrating an application of the present disclosure. A system 1000 includes a controller such as a PLC, an IO-Link^{®} master 300 which is an exemplary data relay device communicatively connected to a controller 100 over a network 2, and equipment (which is also referred to as an IO-Link device) connectable to IO-Link master 300. The IO-Link device is equipment provided in a production line, and a sensor 5 is defined as the IO-Link device in the present disclosure. A type of the IO-Link device, however, is not limited to sensor 5, and may also encompass a switch, a radio frequency identification (RFID), an actuator, and the like.

IO-Link master 300 includes a Web server 310 including a processing portion 320, a generator 330, and tag communication setting 340. Web server 310 exchanges data including IO-Link setting 28 with a Web browser 23 and exchanges data including structure information 220 with a UPG developer 230. UPG developer 230 uses data indicated by structure information 220 for design, creation, or the like of a user program (UPG) 240 in accordance with a user operation, and provides (loads) created UPG 240 to controller 100. UPG 240 includes a control program to be executed for control by controller 100 of equipment provided in a production line. Structure information 220 is provided as information that secures compatibility of setting involved with communication between pieces of equipment including sensor 5, IO-Link master 300, and controller 100. Creation of UPG 240 includes describing (editing) instruction codes (of a program) in a programming language, debugging the program, compiling the program, and the like. The compiling may encompass conversion or the like of the codes of the program into codes in a form executable by controller 100. Though a type of the programming language in which the UPG is described is not limited, for example, a programming language in accordance with IEC 61131-3 may be used.

Fig. 1 shows a main component that relates to generation of structure information 220 with a solid line and shows other components with a dashed line for the sake of illustration.

IO-Link master 300 is configured to exchange a signal or data with each sensor 5 connected to IO-Link master 300 over a network 3 and to exchange data with controller 100 over network 2, and IO-Link master 300 plays a role as a relay that bidirectionally communicatively connects controller 100 and sensor 5 to each other on one-to-one basis.

Controller 100 executes a control program using various types of data including later-described process data of the IO-Link device (for example, sensor 5) transferred from IO-Link master 300 and transfers a control command which is a result of execution via IO-Link master 300 to the IO-Link device. The IO-Link device operates in accordance with the control command, and the various types of data including process data indicating a result of operation are transferred via IO-Link master 300 to controller 100. Controller 100 periodically performs such exchange of data with the IO-Link device and execution of the control program to cyclically control the IO-Link device. At least one of such process data or the control command indicates data that relates to control of the IO-Link device which is sensor 5.

IO-Link master 300 includes a not-shown processor, a communication interface 301 for connection to network 2, and a communication interface 302 including a plurality of ports configured to be connectable to network 3 for connection of sensors 5. Web server 310 includes processing portion 320 and generator 330. Processing portion 320 performs at least one of operations including collection, processing, or output of data that is transferred over network 3 and relates to control in accordance with setting (which is also referred to as communication setting) that relates to communication. Generator 330 generates structure information 220 including information on communication setting and provides (imports) the structure information to UPG developer 230.

In the present disclosure, data is transferred over network 2 and network 3 in accordance with the communication setting. Such communication setting includes, for example, a communication protocol to be applied to the network. For example, the IO-Link which is a standardization technology for communication between an IO-Link device and an IO terminal such as IO-Link master 300, indicated by the standard IEC 61131-9 defined by the International Electrotechnical Commission (IEC), is applied as the communication protocol of network 3. For example, the tag data link (which is also referred to as tag communication) which is a communication protocol (for example, a communication protocol on EtherNet/IP^{®}) different from that for network 3 is applied as the communication protocol of network 2. In Fig. 1, in Web server 310, tag communication setting 340 indicating communication setting corresponding to the tag data link is stored in an internal memory and IO-Link setting 28 indicating communication setting corresponding to the IO-Link is transferred from an external device. Though this external device includes, for example, Web browser 23, without being limited to Web browser 23, it may be a device outside system 1000.

IO-Link setting 28 and tag communication setting 340 each include a format of data to be exchanged. The format includes, for example, a size (byte) of data to be exchanged and an identifier of the data, or the format includes a structure of the data (a structure including the size of the data, the identifier of the data, and the like). The data includes a plurality of pieces of unit data. A data configuration included in the format indicates, for example, a type of unit data (a name (meaning), a data type, a size, or the like of unit data) to be stored in (assigned to) each bit (or each byte) of data.

Processing portion 320 obtains the communication setting which are tag communication setting 340 and IO-Link setting 28 and generator 330 generates, based on the obtained communication setting, structure information 220 including information (for example, a format or the like) that relates to the communication setting. For example, structure information 220 represents a structure for storage (assignment) of data in accordance with the format of IO-Link setting 28 of each of one or more sensors 5 connected to IO-Link master 300, in accordance with the format indicated by tag communication setting 340.

In general, the format indicated by IO-Link setting 28 is different depending on the type of the IO-Link device (sensor 5), and the number of IO-Link devices (sensors 5) connected to IO-Link master 300 is also variable. Generator 330 generates structure information 220 in accordance with IO-Link setting 28 and tag communication setting 340 in accordance with the number or the type of sensors 5 belonging to network 3. UPG 240 of controller 100 is created with reference to such structure information 220. Therefore, as created UPG 240 is executed, regardless of the number or the type of sensors 5 belonging to network 3, communication with compatibility of communication setting being secured is performed between each sensor 5 and controller 100.

Structure information 220 includes, for example, an extensible markup language (XML) file described in the XML. UPG developer 230 defines a structure type to be referred to by UPG 240 from structure information 220 based on structure information 220 when UPG developer 230 creates UPG 240. UPG developer 230 creates UPG 240 using a structure variable having the defined structure type, converts created UPG 240 into an executable form, and loads converted UPG 240 to controller 100.

When UPG 240 is executed in controller 100, data exchanged between one or more sensors 5 connected to IO-Link master 300 and controller 100 is set to the structure variable and UPG 240 is executed by using data set to the structure variable.

Web server 310 may be configured to include at least one of processing portion 320 or generator 330.

A more specific exemplary application of the present invention will be described below.

### <A. Network Configuration>

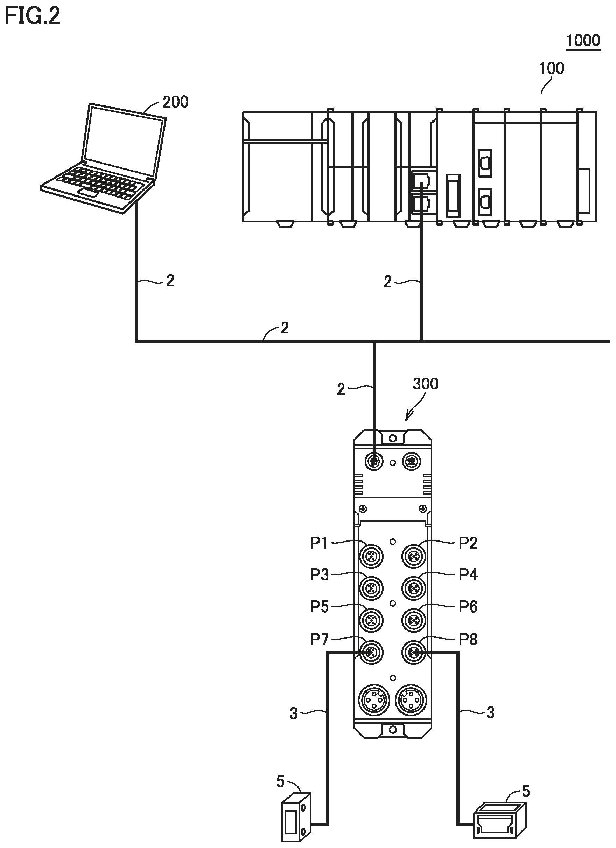

Fig. 2 is a diagram schematically showing a network configuration of system 1000 according to the present embodiment. In system 1000, controller 100, a support apparatus 200, and IO-Link master 300 are communicatively connected to one another over network 2.

Another information processing apparatus including a programmable display such as a not-shown human machine interface (HMI) may be connected to network 2. In system 1000, a plurality of controllers 100 or a plurality of IO-Link masters 300 are connectable to network 2. Field equipment including sensor 5 may be connected to controller 100, without IO-Link master 300 being interposed.

Controller 100 includes a central processing unit (CPU) unit which is an entity that executes various programs including UPG 240, a power supply unit that supplies electric power to the CPU unit or the like, and an input and output unit that allows exchange of a signal between controller 100 and the field equipment. The input and output unit is connected to the CPU unit through a local bus within controller 100. The CPU unit executes UPG program 240 (control program) to obtain data from the field equipment (for example, sensor 5), executes the control program using the obtained data, and outputs a control command in accordance with a result of execution to a not-shown relay or a not-shown actuator which are the field equipment.

Support apparatus 200 is connected to network 2 and communicates with controller 100 or IO-Link master 300. A switch (hub) may be provided on network 2, and support apparatus 200 may communicate with controller 100 or IO-Link master 300 with the switch being interposed. Support apparatus 200 includes UPG developer 230 which is a module for support of development of UPG 240 to be executed in controller 100 and Web browser 23. Support apparatus 200 may further include a module that monitors an operational status of controller 100, values of various types of data handled by controller 100, or the like over network 2.

Though Web browser 23 is provided in support apparatus 200 in the present embodiment, Web browser 23 may be provided in another information processing apparatus connected to network 2, as long as it can communicate with Web server 310 of IO-Link master 300.

Communication interface 302 of IO-Link master 300 includes eight ports P1, P2, P3, P4, P5, P6, P7, and P8 each for connection of the IO-Link device such as sensor 5 over network 3. The number of ports of communication interface 302 is not limited to eight.

Sensor 5 includes a sensing element such as an ultrasonic element or a photoelectric conversion element, and measures a state quantity or a physical quantity of an object with the sensing element. Sensor 5 may include different types of sensors depending on a type of an object to be measured.

Sensor 5 compares the measured state quantity or physical quantity with a threshold value and generates an output (ON/OFF signal) indicating a result of comparison. Sensor 5 creates, based on IO-Link setting 28, process data (data including a sensor identifier and a result of measurement) in a format in accordance with IO-Link setting 28, and has the process data stored in the internal memory. Sensor 5 reads from the internal memory, the process data in certain cycles or in response to a request and transfers the read process data to IO-Link master 300. The result of measurement may include an output (ON/OFF signal) indicating a type of an object to be measured, a measured state quantity or physical quantity, or a result of comparison.

### <B. Hardware Configuration>

### (b1: Hardware Configuration of Controller)

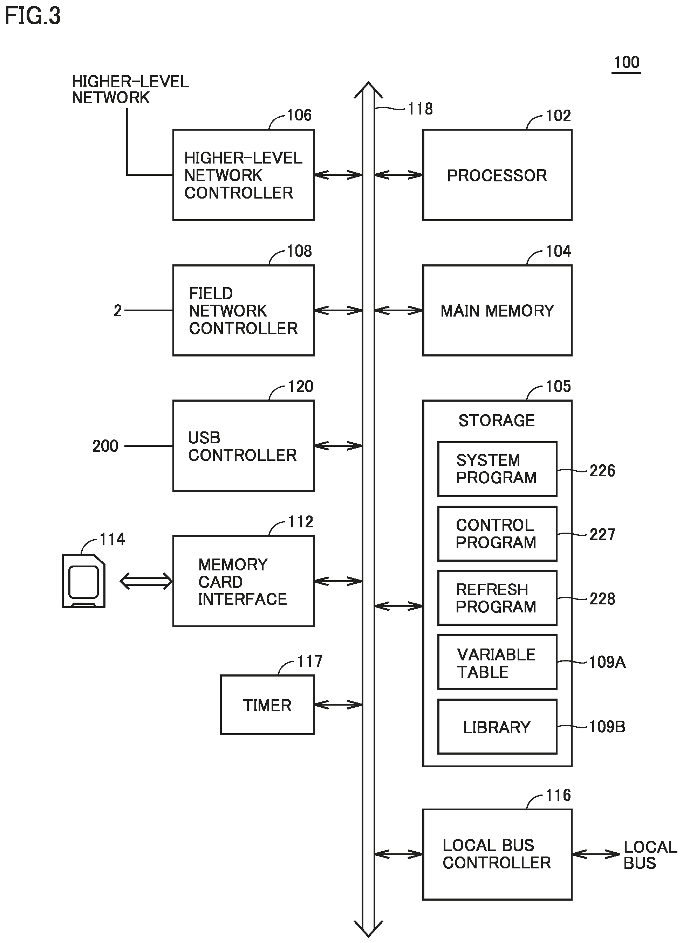

Fig. 3 is a schematic diagram showing a hardware configuration of the CPU unit of controller 100 according to the present embodiment. Referring to Fig. 3, the CPU unit includes a processor 102, a main memory 104, a storage 105, a higher-level network controller 106 for connection of a higher-level network including the Internet or the like, a field network controller 108 for connection of network 2, a memory card interface 112 to which a memory card 114 which is an exemplary recording medium is removably attached, a local bus controller 116 for connection of a local bus, a timer 117, and a universal serial bus (USB) controller 120. These components are connected through a processor bus 118.

Processor 102 mainly corresponds to a computing portion that executes UPG 240 including the control program, and may include circuitry such as a central processing unit (CPU) or a graphics processing unit (GPU). Specifically, processor 102 performs various types of processing by reading a program stored in storage 105, developing the read program on main memory 104, and executing the developed program. Processor 102 may include circuitry such as a field-programmable gate array (FPGA) or an application specific integrated circuit (ASIC).

Main memory 104 is implemented by a volatile storage device such as a dynamic random access memory (DRAM) or a static random access memory (SRAM), a non-volatile storage device such as a read only memory (ROM), or the like. Storage 105 is implemented, for example, by a non-volatile storage device such as a solid state drive (SSD) or a hard disk drive (HDD).

UPG 240 such as a system program 226 including an operating system (OS), a control program 227, and a refresh program 228, a variable table 109A in which a variable referred to by UPG 240 has been registered, and a library 109B are stored in storage 105. When UPG 240 is executed, a plurality of functions are performed. In library 109B, a function program which is a function block (FB) or a function (FUN) is registered for each of one or more functions high in general versatility among the plurality of functions. When the UPG is executed, the FB or the FUN is called from library 109B and executed. Typically, UPG developer 230 generates the FB or the FUN in accordance with a user operation, converts it into an executable form, and loads (stores) it to library 109B. In the present embodiment, control program 227 may typically include a sequence program. The sequence program encompasses what is called an IEC program composed, for example, of one or more instructions described in accordance with the standard IEC 61131-3.

### (b2: Hardware Configuration of Support Apparatus)

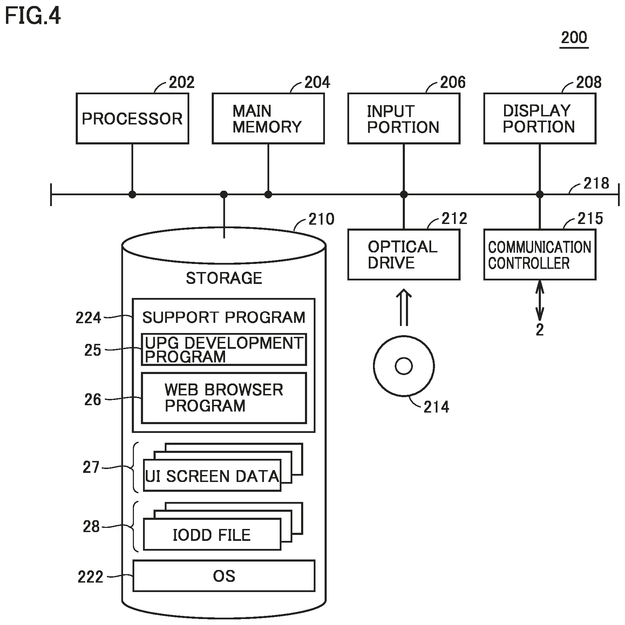

Fig. 4 is a schematic diagram showing an exemplary hardware configuration of the support apparatus according to the embodiment. Support apparatus 200 is implemented by hardware (for example, a general-purpose personal computer) in accordance with a general-purpose architecture by way of example.

Support apparatus 200 includes a processor 202, a main memory 204, an input portion 206, a display portion 208, a storage 210, an optical drive 212, and a communication controller 215. These components are connected through a processor bus 218.

Processor 202 is implemented by a CPU, a GPU, or the like, and performs various types of processing as will be described later by reading a program stored in storage 210, developing the read program on main memory 204, and executing the developed program.

Main memory 204 is implemented by a volatile storage device such as a DRAM or an SRAM. Storage 210 is implemented, for example, by a non-volatile storage device such as an HDD or an SSD.

An OS 222, a support program 224 for providing a module as support apparatus 200, a user interface (UI) screen data 27, and IO-Link setting 28 are stored in storage 210. Support program 224 includes a UPG development program 25 and a Web browser program 26 that implement UPG developer 230 and Web browser 23 when they are executed. IO-Link setting 28 includes an IO device description (IODD) file for each of all IO-Link devices including sensor 5 connectable to IO-Link master 300. The IODD file for the IO-Link device includes an identifier of the IO-Link device and a format of process data of the IO-Link device described, for example, in XML.

Input portion 206 is implemented by a keyboard, a mouse, or the like, and accepts a user operation. Display portion 208 is implemented by a display, various indicators, or the like, and a result of processing from processor 202, a UI screen, or the like is shown therein.

Communication controller 215 is responsible for exchange of data (communication) between support apparatus 200 and controller 100 or IO-Link master 300 over network 2.

A recording medium 214 (for example, an optical recording medium such as a digital versatile disc (DVD)) where a computer readable program is stored in a non-transitory manner is removably attached to optical drive 212. Optical drive 212 reads from recording medium 214, a program stored therein and has the program stored in storage 210 or the like.

Though support program 224 or the like may be installed in storage 210 through computer readable recording medium 214, it may be installed as being downloaded from a server apparatus or the like on the network. A module provided by support apparatus 200 according to the present embodiment may be implemented in a form using a part of a module provided by OS 222.

Though Fig. 4 shows an exemplary configuration in which a module necessary as support apparatus 200 is implemented by execution of a program by processor 202, a part or the entirety of these modules may be implemented by dedicated hardware circuitry (for example, an application specific integrated circuit (ASIC), a field-programmable gate array (FPGA), or the like).

Support apparatus 200 may include a portable information processing terminal. The portable information processing terminal may include a terminal in which a module that communicates with a device including controller 100 has been installed, such as a smartphone or a tablet terminal.

### (b3: Hardware Configuration of IO-Link Master)

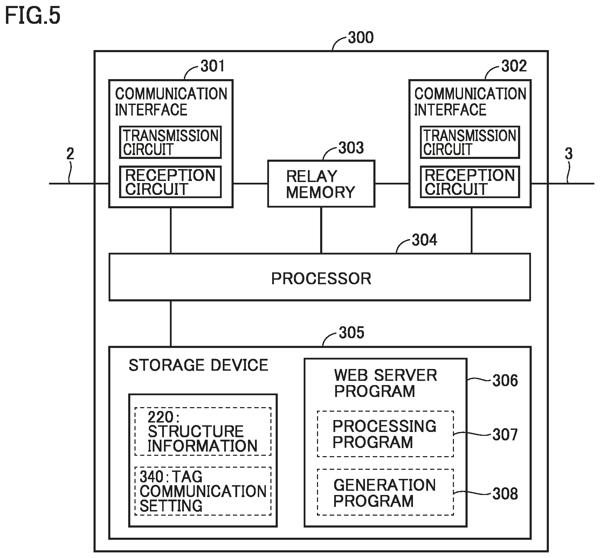

Fig. 5 is a schematic diagram showing an exemplary hardware configuration of the IO-Link master according to the embodiment. IO-Link master 300 includes a processor 304, a storage device 305, a relay memory 303 that plays a role as a buffer memory, communication interface 301 for connection of network 2, and communication interface 302 for connection of network 3. Information including a Web server program 306 corresponding to Web server 310, structure information 220 generated by generator 330, and tag communication setting 340 is stored in storage device 305. Web server program 306 includes a processing program 307 and a generation program 308 corresponding to processing portion 320 and generator 330. Communication interface 301 includes a transmission circuit and a reception circuit to which network 2 is connected, and communication interface 302 includes a transmission circuit and a reception circuit corresponding to ports P1 to P8. Processor 304 may include circuitry such as a CPU, a field-programmable gate array (FPGA), or an application specific integrated circuit (ASIC).

Communication interface 302 receives process data periodically transferred from sensor 5 in accordance with IO-Link setting 28 and has the process data stored in relay memory 303. The process data is periodically transferred from relay memory 303 to controller 100. As controller 100 performs refresh which will be described later, processing portion 320 reads the process data from relay memory 303 and transfers the process data to controller 100 via communication interface 301. More specifically, processing portion 320 generates tag data where the process data of sensor 5 is stored based on tag communication setting 340 and IO-Link setting 28 (IODD file) corresponding to sensor 5 and outputs the tag data to communication interface 301. Communication interface 301 outputs the tag data from processing portion 320 to network 2. The tag data generated by processing portion 320 has the structure indicated by structure information 220.

Storage device 305 includes a volatile storage device such as a dynamic random access memory (DRAM) or a static random access memory (SRAM), a non-volatile storage device such as a read only memory (ROM), a solid state drive (SSD), or a hard disk drive (HDD), or the like.

### <C. Exchange of Data Between Controller and IO-Link Master>

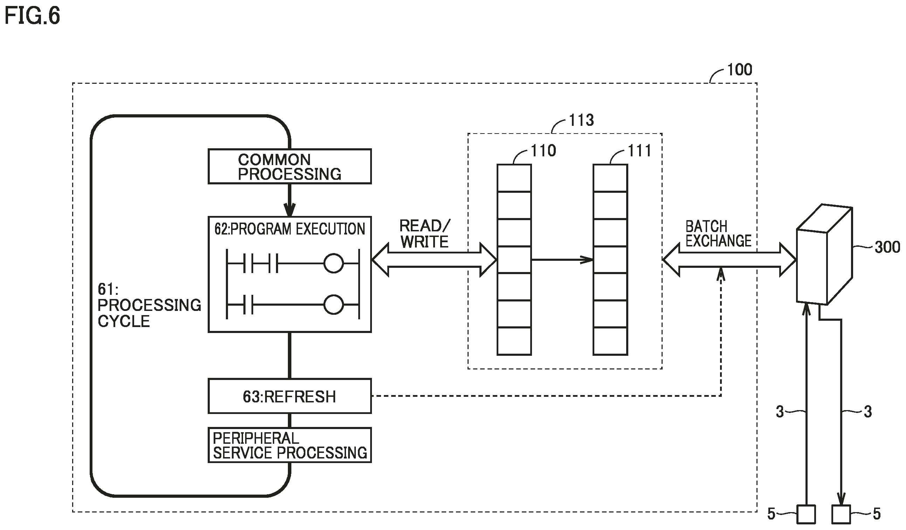

Fig. 6 is a diagram illustrating refresh according to the present embodiment. Refresh is realized by execution of refresh program 228. Controller 100 executes refresh program 228 in synchronization with a cycle of execution of control program 227. Referring to Fig. 6, in controller 100, processing including program execution 62 and refresh 63 is periodically performed in accordance with a processing cycle 61 based on timer 117. Control program 227 is a variable program. In other words, input data (process data of sensor 5) and output data (control command) referred to by control program 227 when it is executed are configured as being available by using an input variable, an output variable, and the like for each piece of data. These variables indicate an address 110 or an address 111 in a memory area 113 inside controller 100. When control program 227 is executed, this address 110 or 111 is accessed and data is read or written in address 110 or 111.

Processor 102 of controller 100 executes control program 227 in such a manner as executing instructions sequentially from a first instruction to a last instruction one by one while processor 102 reads and writes data from or in address 110. The data at address 110 after it is read and written is written in address 111. At certain timing in processing cycle 61, data at address 111 is read and transferred to IO-Link master 300 under tag communication setting 340, and data transferred from IO-Link master 300 to controller 100 under tag communication setting 340 is written in address 110. Thus, at certain timing, batch exchange between data transferred from IO-Link master 300 and data within memory area 113 is performed. Refresh 63 includes such processing for batch exchange. The input variable and the output variable include a structure variable having a structure type based on structure information 220. Therefore, data exchange between sensor 5 and controller 100 on one-to-one basis is realized by reading and writing by control program 227 of data of the structure variable stored in memory area 113.

### <D. Data Structure>

### (d1. Connection of Sensor and Data Structure)

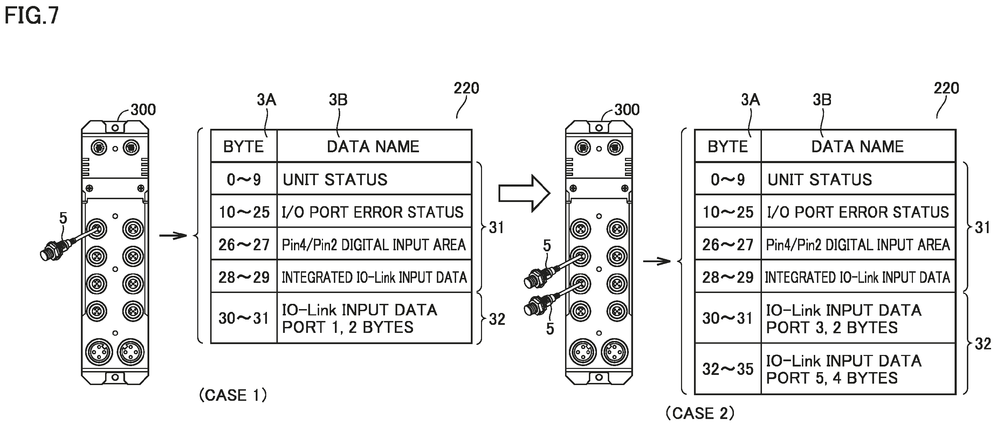

Fig. 7 is a diagram schematically showing relation between connection of the sensor and the data structure according to the present embodiment. In Fig. 7, a structure of data indicated by structure information 220 generated by generator 330 has a format of tag communication setting 340 and includes a data size 3A and a data name 3B for each piece of data included in the structure. Data name 3B indicates the identifier, the type, the meaning, or the like of the data. The structure indicated by structure information 220 includes an area 31 having a fixed length for storage of data specific to IO-Link master 300 and an area 32 for storage of data (the process data or the like) specific to each sensor 5 in accordance with the format indicated by an IODD file corresponding to sensor 5. In association with a port to which sensor 5 is connected, generator 330 has information on that port stored in area 32. This information on the port includes the identifier of the port or this information on the port includes the identifier of the port and the identifier of sensor 5 (the model of sensor 5 or the like) connected to the port.

Since the size of process data may generally be different depending on the type of sensor 5, the size of area 32 is variable depending on the number and the types of one or more sensors 5 connected to IO-Link master 300. For example, in (case 1) in Fig. 7, sensor 5 that outputs 2-byte process data is connected only to first port P1 of IO-Link master 300 and hence area 32 has two bytes, whereas in (case 2), sensor 5 that outputs 2-byte process data and sensor 5 that outputs 4-byte process data are connected to third port P3 and fifth port P5 of IO-Link master 300 and hence area 32 has the size of six bytes.

The size of area 32 may be fixed without being limited to being variable. For example, in an example where the structure indicated by structure information 220 has a maximum assumable fixed size, process data corresponding to the number of sensors 5 connected to IO-Link master 300 is stored in area 32 held by the structure having the fixed size.

### (d2. Definition of Structure Type)

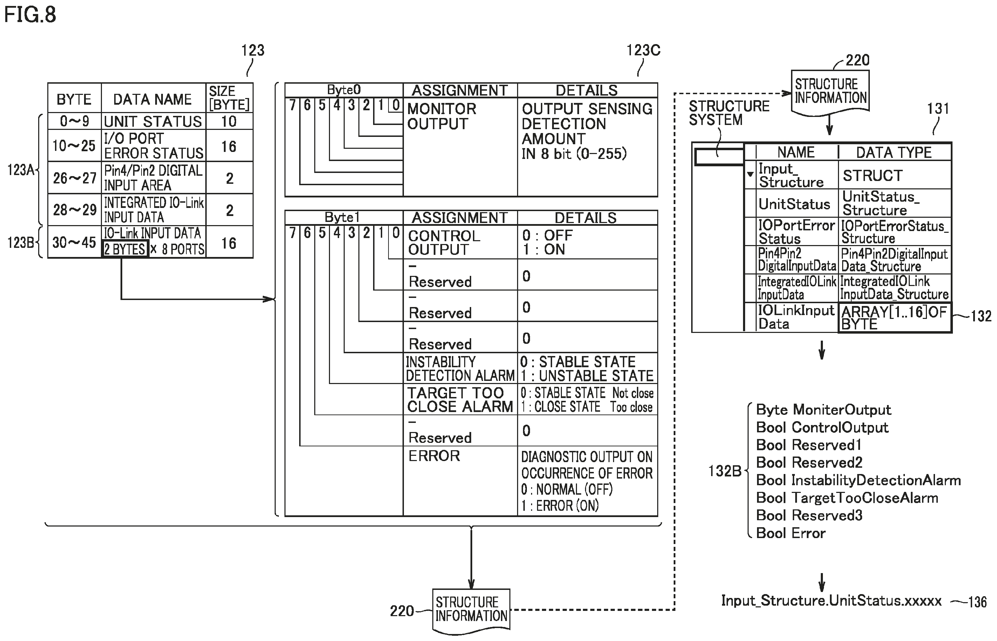

Fig. 8 is a diagram schematically showing definition of the structure type according to the present embodiment. Referring to Fig. 8, in a format 123 (configuration of data) of the tag data indicated by tag communication setting 340, a lead byte to a 29th byte configure a master common portion 123A where data specific to IO-Link master 300 is stored and subsequent 30th to 45th bytes configure a sensor specific portion 123B where data specific to each sensor 5 is stored. The data specific to IO-Link master 300 is stored in advance in the internal memory. The data specific to each sensor 5 in sensor specific portion 123B includes process data configured in accordance with a format 123C defined by IO-Link setting 28 (IODD file) corresponding to sensor 5. For example, format 123C indicates that the data specific to sensor 5 has the size of two bytes and indicates assignment of unit data to the two bytes. This assignment shows, for example, assignment of monitor output to the first byte, and sequentially from the lead bit in the second byte, assignment of 1 bit to control output, assignment of three bits to a reserve area, assignment of two bits to whether or not there is an alarm, assignment of one bit to a reserve area, and assignment of the final bit (one bit) to whether or not there is an error.

Generator 330 generates structure information 220 in accordance with format 123 of tag communication setting 340 including master common portion 123A configured in the format of IO-Link master 300 and sensor specific portion 123B configured in format 123C of IO-Link setting 28 of each sensor 5 connected to IO-Link master 300.

UPG developer 230 analyzes structure information 220 and defines a structure type 131 based on a result of analysis. A variable (member variable) that configures structure type 131 has a variable of an array type (ARRAY) 132. Definition 132B of each element that configures array type 132 is based on format 123C of data specific to each sensor 5 (data specific to each sensor 5 in sensor specific portion 123B) that configures structure information 220. In creation of control program 227, the user edits the program codes using one or more variable names 136 indicating one or more structure type variables having defined structure type 131 or one or more member variables among the structure type variables. Therefore, controller 100 can read data on the member variable indicated by variable name 136 when controller 100 executes control program 227.

The format of data may be a format including the size of the data and the identifier of the data or a format including a configuration including the size of the data and the identifier of the data.

### <E. Sequence>

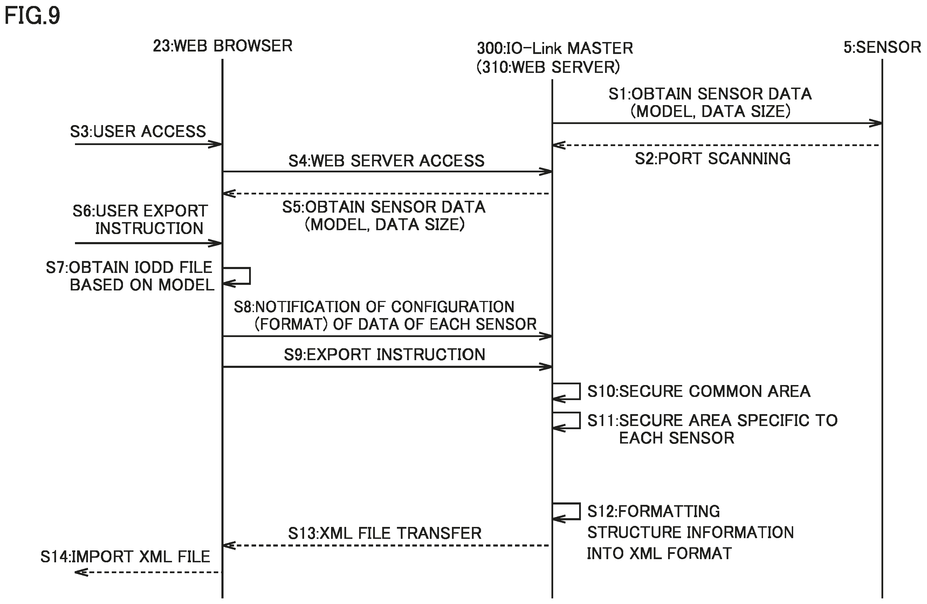

Fig. 9 is a diagram schematically showing a sequence according to the present embodiment. The sequence mainly shows processing for generating structure information 220.

Referring to Fig. 9, processing portion 320 of Web server 310 processes information of sensor 5 connected to IO-Link master 300 (steps S1 and S2). More specifically, processing portion 320 outputs a request from the port via communication interface 302 and performs port scanning on all of ports P1 to P8 to detect whether or not response is received from the port. The request requests the type of sensor 5 (the model and the data size) to be sent back. Processing portion 320 specifies (identifies) the port that has received response by port scanning and has sensor data stored for the specified port, the sensor data being a set of the identifier of the port and response (the model and the data size). It is assumed that response has been given from one or more ports (one or more sensors 5).

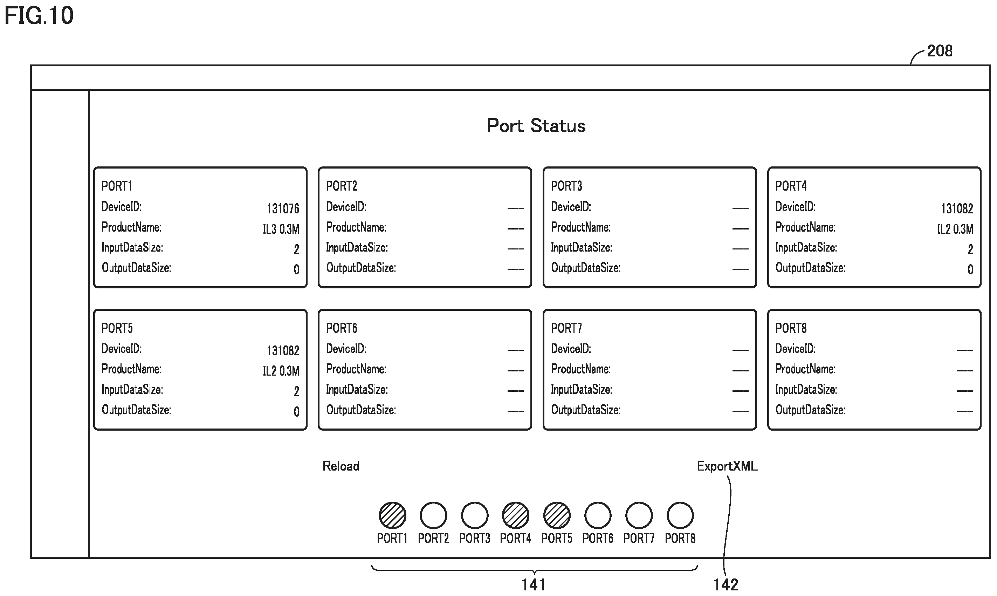

When Web browser 23 accepts access from the user, Web browser 23 accesses Web server 310 and obtains sensor data of each of one or more sensors 5 connected to IO-Link master 300 (steps S3, S4, and S5). Web browser 23 may output the obtained sensor data to a Web screen in Fig. 10 which will be described later.

When Web browser 23 accepts an export instruction from a user, it obtains, based on the type (model) of sensor 5 indicated by the sensor data of each sensor 5, an IODD file corresponding to the type, among a plurality of IODD files of IO-Link setting 28 (steps S6 and S7). Web browser 23 searches the obtained IODD file of each sensor 5 for the format of the process data of this sensor 5, notifies Web server 310 of the retrieved format, and transfers the instruction for export of structure information 220 to Web server 310 (steps S8 and S9). The format retrieved from the IODD file described above corresponds to format 123C in Fig. 8.

When Web server 310 accepts the export instruction, generator 330 secures for structure information 220, area 31 in accordance with the format of tag communication setting 340 and secures, for each sensor 5, area 32 corresponding to sensor 5 in accordance with the format of IO-Link setting 28 (steps S10 and S11). Structure information 220 is thus generated.

Web server 310 stores generated structure information 220, analyzes stored structure information 220, formats the structure information in an XML format (step S12), and transfers an XML file where structure information 220 formatted into the XML format is stored to Web browser 23 (step S13). Web browser 23 imports the XML file (structure information 220) transferred from Web server 310 to UPG developer 230 (step S14).

Though Web browser 23 performs processing for searching the IODD file based on the type (model) of sensor 5 to obtain the format of data in Fig. 9, the processing may be performed by Web server 310.

### (e1. Exemplary Screen)

Fig. 10 is a diagram showing an exemplary screen that shows sensor data according to the present embodiment. Web browser 23 outputs to display portion 208, a Web screen shown in Fig. 10 based on the sensor data of each sensor 5 obtained by port scanning. The Web screen includes an area "Port Status," an area 141 where the port where connection of sensor 5 has been detected is shown, and a button 142 that accepts an operation for instructions to export of an XML file. In the area "Port Status," for each port among ports P1 to P8 where connection of sensor 5 has been detected, the sensor data of sensor 5 is shown in association with the identifier of the port.

### <F. Generation of FUN>

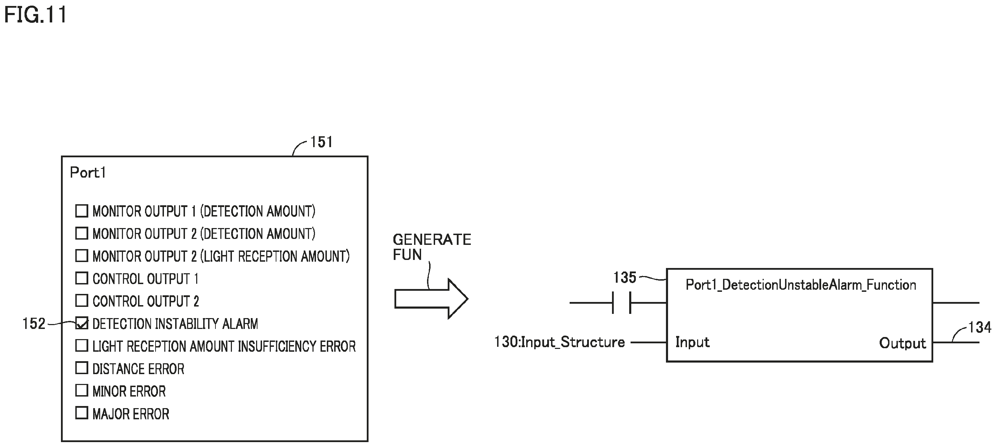

Fig. 11 is a diagram schematically showing generation of a FUN according to the present embodiment. Generator 330 generates a FUN 135 that receives a variable 130 having structure type 131 as input and outputs data of the designated member variable.

More specifically, Web browser 23 outputs a screen 151 based on format 123C of the process data of sensor 5 for the port where connection of sensor 5 has been detected. In screen 151, for example, a list of types of unit data that configures the process data is shown based on format 123C of sensor 5 connected to port P1. Web browser 23 accepts designation of unit data in the list on screen 151. When Web browser 23 accepts an operation 152 by the user to designate, for example, a "detection unstable alarm," generator 330 of Web server 310 generates FUN 135 based on the operation by the user.

FUN 135 is a function program configured to receive variable 130 of structure type 131 as input, to select (extract) only data of the designated variable of the "detection unstable alarm" among variables (member variables) that configure variable 130 of the structure type, and to derive the data as an output 134. FUN 135 generated by Web server 310 is imported via Web browser 23 to UPG developer 230 together with structure information 220 (XML file). FUN 135 may be stored in library 109B of controller 100. The variable that can be designated by operation 152 by the user is not limited to a single variable but two or more variables may be designated.

FUN 135 generated by generator 330 may be a function that receives a value of variable 130 (for example, a value of the member variable) of structure type 131 as input and outputs a statistical value (a statistical value such as a moving average value, a standard deviation, a maximum value, a minimum value, or the like of a value indicated by the process data) of the value of the member variable, and the function implemented by the FUN is not limited.

### <G. Distinction of Structure Type>

When there is a single IO-Link master 300 connected to controller 100 as in the embodiment described above, only structure information 220 corresponding to IO-Link master 300 is generated and one type of structure type 131 is defined in control program 227.

In contrast, in an example where there are two or more IO-Link masters 300 communicatively connected to controller 100, structure information 220 corresponding to each IO-Link master 300 may be generated and two or more types of structure type 131 may be defined in control program 227. Therefore, in creation of control program 227, handling of each of the two or more types of structure type 131 as being distinguished from another type of structure type is demanded.

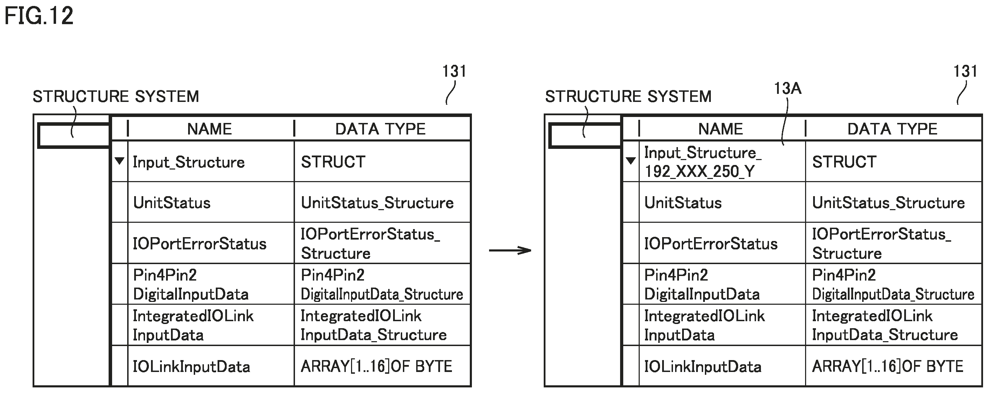

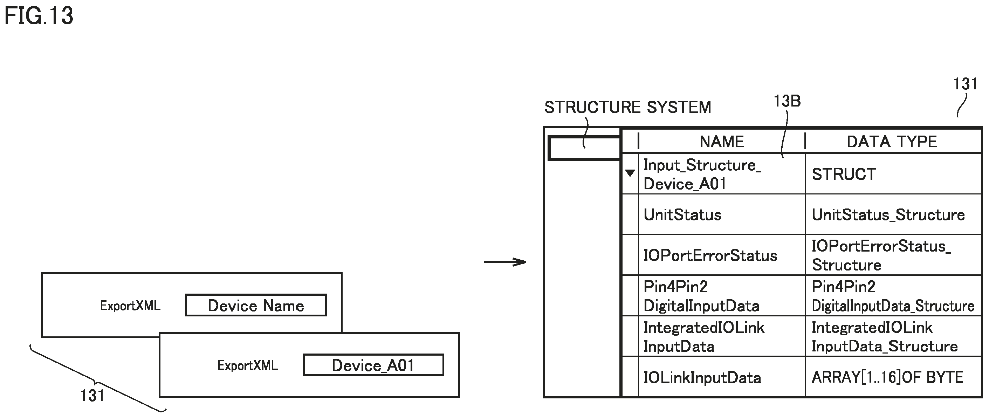

In the present embodiment, a name (structure name) is given to the structure type by making use of a naming rule. Figs. 12 and 13 are each a diagram illustrating a rule for naming the structure type according to the present embodiment. In Fig. 12, structure type 131 is given a structure name 13A including an IP address of IO-Link master 300, and in Fig. 13, structure type 131 is given a structure name 13B including a device name designated by the user operation via Web browser 23. Processing portion 320 may generate the structure name and adds the structure name to structure information 220. The rule of giving the structure name is not limited as such.

### <H. Another Exemplary Structure information>

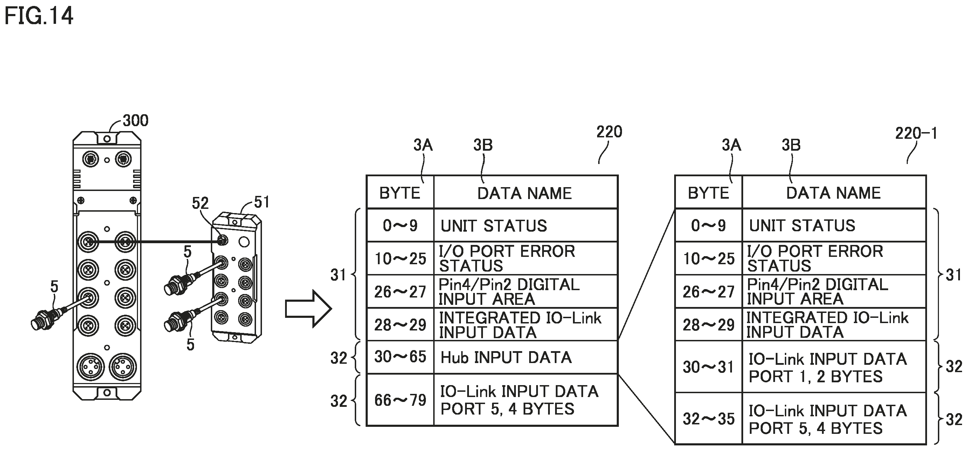

Fig. 14 is a diagram showing another exemplary structure information according to the present embodiment. Equipment that plays a role as a point of relay of communication such as a hub 51 may be connected to the port of IO-Link master 300. Hub 51 includes a connection port 52 to which IO-Link master 300 is communicatively connected and a plurality of ports to which IO-Link devices are connectable. Hub 51 transmits data received from the IO-Link device through the port, to IO-Link master 300 through connection port 52.

In Fig. 14, in hub 51, sensor 5 having the data size of two bytes is connected to port "1" and sensor 5 having the data size of four bytes is connected to port "5". In IO-Link master 300, hub 51 is connected to the first port and sensor 5 having the data size of four bytes is connected to the fifth port.

Processing portion 320 of IO-Link master 300 performs port scanning and receives response from sensor 5 connected to the fifth port and hub 51 connected to the first port. Response from hub 51 includes information (the model and the data size) of each of two sensors 5 connected to hub 51. Processing portion 320 has the sensor data stored for the port where response has been specified (detected), the sensor data being a set of the identifier of the port and response (the model and the data size of each sensor 5).

Generator 330 extracts the sensor data indicated by response from hub 51 from the sensor data stored by processing portion 320 and generates structure information 220 having a nested structure based on the extracted sensor data. More specifically, generator 330 generates structure information 220 including area 31 and two areas 32 based on the sensor data stored as instructed by processing portion 320. One of two areas 32 of structure information 220 is assigned to an area where the sensor data of sensor 5 at the fifth port of IO-Link master 300 is to be stored, and another one is assigned to an area where structure information 220-1 is stored in the nested structure. Structure information 220-1 is generated similarly to structure information 220 using the format indicated by IO-Link setting 28 of each sensor 5 connected to hub 51.

In the present embodiment, the number of connectable sensors 5 can be increased regardless of the number of ports of one IO-Link master 300, by adopting network topology where hub 51 is connected to the port of IO-Link master 300 as shown in Fig. 14. Even when such network topology is adopted, by using the nested structure, generator 330 can generate structure information 220 having area 32 corresponding to each of all sensors 5 belonging to the network topology.

### <I. Adjustment in Accordance with Change of Connection>

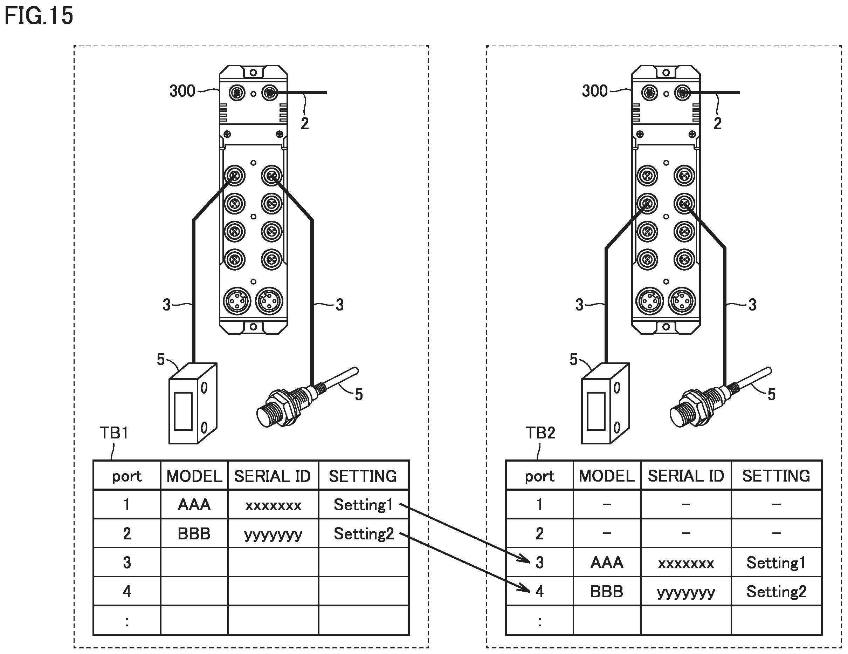

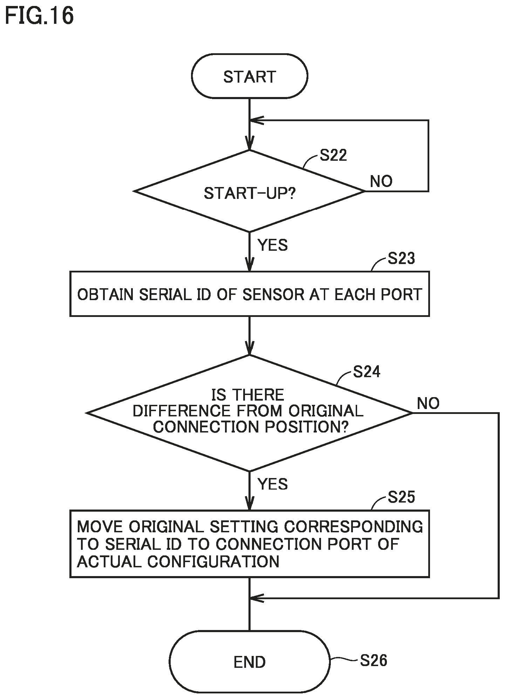

Fig. 15 is a diagram schematically showing change of a connection configuration of the sensor according to the present embodiment. Fig. 16 is a flowchart of processing for detecting the connection configuration of the sensor according to the present embodiment. In the present embodiment, processing portion 320 of Web server 310 manages sensor 5 connected to IO-Link master 300 based on tables TB1 and TB2. Tables TB1 and TB2 include, for each port, a port number of the port and information (the model, a serial ID, and setting) on sensor 5 connected to the port.

Processing portion 320 detects whether or not a position of connection of sensor 5 to IO-Link master 300 has been changed, at the time of start-up of IO-Link master 300. When change of the port (port number) where sensor 5 is connected, for example, from ports P1 and P2 (see table TB1) to ports P3 and P4 is detected by port scanning as shown in Fig. 15, in response to the change, table TB2 is reconfigured from table TB1.

Referring to Fig. 16, processing portion 320 determines whether or not IO-Link master 300 has been started up (step S22). When determination that the IO-Link master has been started up is not made (NO in step S22), step S22 is repeated. When determination that the IO-Link master has been started up is made (YES in step S22), processing portion 320 performs port scanning, and obtains the serial ID which is the identifier from response received at the port to which sensor 5 is connected (step S23). Processing portion 320 searches based on the serial ID, table TB1 for the port number corresponding to the serial ID, and compares the retrieved port number with the port number obtained in step S23. Processing portion 320 determines whether or not the position of connection is different, that is, whether or not the port numbers are different from each other, based on a result of comparison (step S24). When it is determined that there is no difference (NO in step S24), that is, when it is determined that there is no change in position of connection of the sensor, the process ends (step S26).

When it is determined that there is a difference (YES in step S24), processing portion 320 reconfigures table TB1 to obtain table TB2 (step S25). More specifically, processing portion 320 moves data of sensor 5 including the serial ID obtained in step S23 in table TB2 to a position corresponding to the port number (ports P3 and P4) obtained in step S23.

According to the processing in Fig. 16, processing portion 320 can manage table TB2 to indicate the position where sensor 5 is connected and the most recently detected position of connection (port number). Therefore, even when the position of connection of sensor 5 is changed, by using information in tables TB1 and TB2, a position of storage (field) of the process data of sensor 5 in a frame transferred over network 2 is not changed.

More specifically, for each port of IO-Link master 300, the position in the frame, of the field where the process data detected at that port is stored, is fixed. Processing portion 320 can specify the field (that is, the field corresponding to original ports P1 and P2) in the frame where the process data of sensor 5 the position of connection of which has been changed should be stored, based on information in tables TB1 and TB2. Therefore, even when the port (port number) to which sensor 5 is connected is changed, for that sensor 5, structure information 220 does not have to be changed, and consequently, change of UPG 240 (control program 227) to be executed in controller 100 does not have to be changed either.

### (i1. Processing in Accordance with Change of Connection)

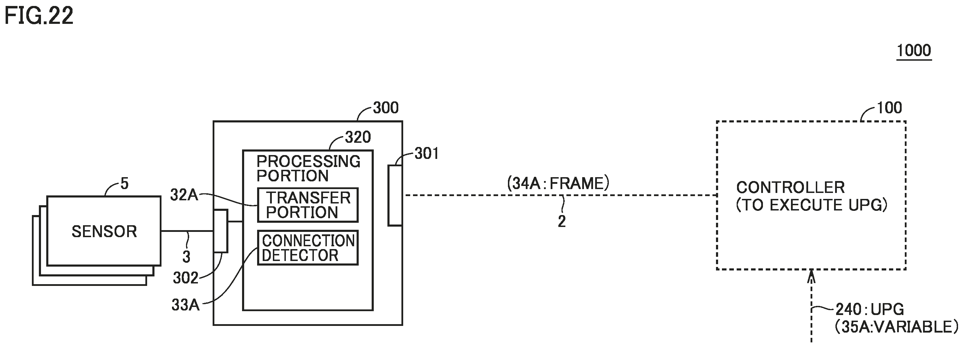

The processing in Fig. 16 will further be described with reference to Fig. 22. Fig. 22 is a diagram schematically showing a configuration for realizing the processing in Fig. 16. Fig. 22 mainly shows an exemplary configuration of processing portion 320. Processing portion 320 includes a component including a transfer portion 32A that performs processing for transferring a frame 34A including a plurality of fields to controller 100 and a connection detector 33A that detects, for each port, whether or not sensor 5 (IO-Link device) connected to that port has been changed to another sensor 5.

In the present embodiment, for ports P1 to P8, each port and the field in frame 34A where the process data transferred from sensor 5 connected to that port is stored are associated with each other in advance in prescribed one-to-one relation, and this associated information is stored in the internal memory of IO-Link master 300. In addition, each field in frame 34A and the member variable that configures the structure type, for which the process data stored in the field should be set, are associated in advance with each other in one-to-one relation.

When IO-Link master 300 is started up, connection detector 33A detects, for each port, whether or not sensor 5 connected to the port has been changed to another sensor 5 (step S24 in Fig. 16). Transfer portion 32A searches table TB1 for the original port to which another sensor 5 has been connected, based on the identifier of another sensor 5 and specifies the port. This original port indicates a concept including the port to which another sensor 5 has most recently been connected.

Transfer portion 32A causes the process data transferred from another sensor 5 to be stored in the field in frame 34A associated with the specified original port in the prescribed relation, and thereafter it transfers frame 34A to controller 100.

Though an example where the process data of sensor 5, connection of which to the port has been detected, is stored in frame 34A is shown, this is also applicable to another port. In other words, the process data of sensor 5 connected to another port is stored in the field in frame 34A associated with another port based on the prescribed relation.

In controller 100, UPG 240 including a variable 35A having the structure type is executed. When UPG 240 is executed, controller 100 sets data in each field in frame 34A transferred from IO-Link master 300 to an element included in variable 35A of the structure type such as an element of the array (the array of the member variable). Such processing for setting process data in each field of frame 34A to the element of variable 35A is performed, for example, by using refresh.

### (i2. Another Type of Processing in Accordance with Change of Connection)

In the present embodiment, when sensor 5 connected to the port is changed to another sensor 5, structure information 220 in storage device 305 may be processed so as not to necessitate change of UPG 240 (control program 227) executed in controller 100. Structure information 220 stored in advance in storage device 305 includes, in association with each port, the identifier of sensor 5 obtained for that port.

More specifically, processing portion 320 obtains the identifier of sensor 5 by port scanning for each of the one or more ports to which sensor 5 is connected, among the plurality of ports P1 to P8. When processing portion 320 detects, for at least one port among the plurality of ports, change of sensor 5 connected to that port to another sensor 5, it searches table TB1 for the original port which is the port to which another sensor 5 has been connected before detection of the change, based on the identifier of another sensor 5, and specifies the original port. Processing portion 320 changes structure information 220 stored in storage device 305 such that the identifier of another sensor 5 is associated with the specified port.

Processing portion 320 has the process data of sensor 5 stored in the field in frame 34A corresponding to each of ports P1 to P8 on one-to-one basis in accordance with structure information 220 in storage device 305, the process data being associated with the port indicated by structure information 220. Therefore, even when sensor 5 connected to the port is changed to another sensor 5, the position of storage (field) in frame 34A, of the process data of another sensor 5 is not changed. Consequently, change of the structure type variable to which data of each field in frame 34A is set and UPG 240 (control program 227) that refers to the structure type variable is not necessitated either.

### <J. Data Collection Unit>

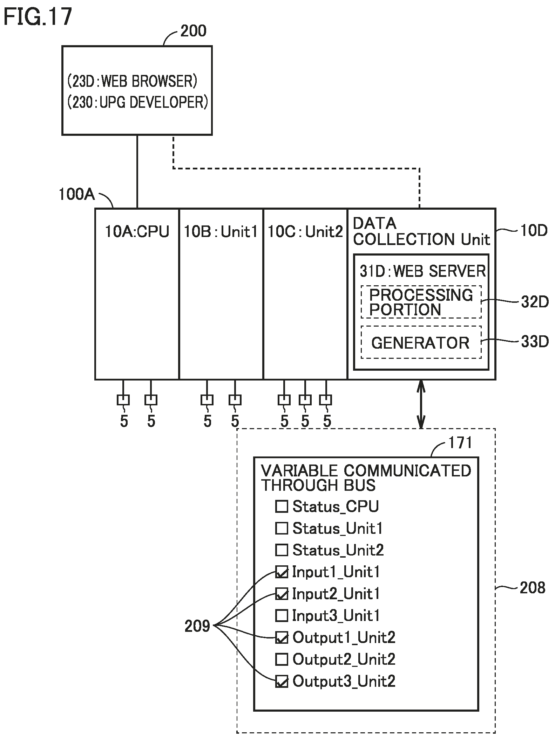

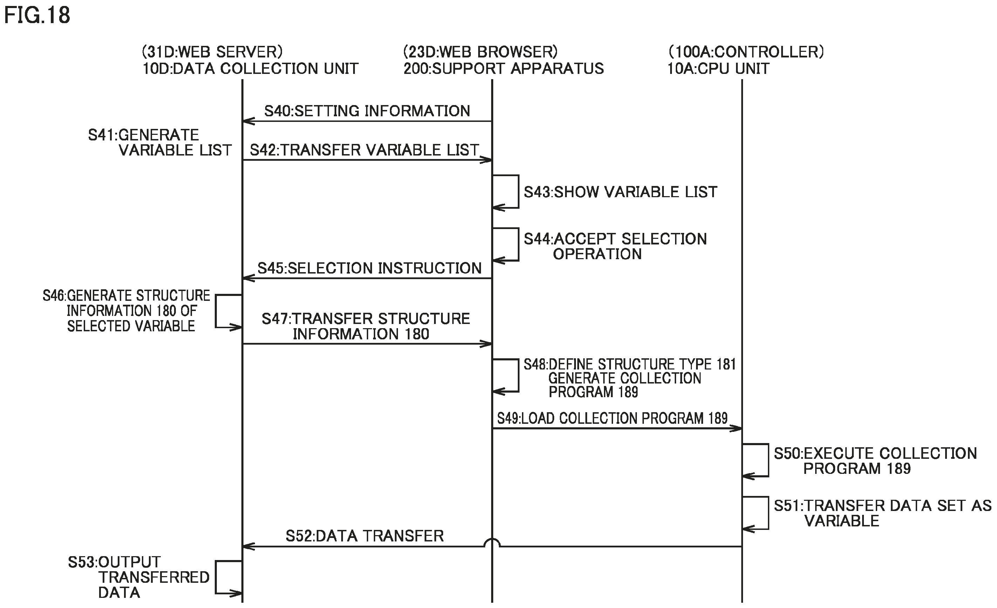

In the present embodiment, communication setting may include setting for specifying data of at least one piece of equipment with which controller 100 is to exchange data, among one or more pieces of equipment (sensor 5) with which controller 100 communicates. A data collection unit attached to controller 100 for such communication setting generates structure information 220 to collect data of one or more pieces of equipment designated by the user from controller 100. Fig. 17 is a diagram schematically showing a configuration in which the data collection unit is connected to the controller according to the present embodiment. Fig. 18 is a diagram schematically showing a sequence of processing in the data collection unit according to the present embodiment.

In Fig. 17, a controller 100A includes a CPU unit 10A, a unit 10B, and a unit 10C. A data collection unit 10D is removably attached to controller 100A. CPU unit 10A, unit 10B, and unit 10C and data collection unit 10D each include a processor, a memory, and a communication circuit, and these units communicate through an internal bus. CPU unit 10A communicates with support apparatus 200 over the network.

CPU unit 10A, unit 10B, and unit 10C are connected to one or more pieces of field equipment provided in the production line over a not-shown field network. For the sake of brevity of description, the field equipment is sensor 5. Data collection unit 10D includes a Web server 31D including a processing portion 32D and a generator 33D configured similarly to processing portion 320 and generator 330.

Referring to Fig. 18, when setting information such as variable definition of control program 227 is transferred from Web browser 23D of support apparatus 200 to processing portion 32D of Web server 31D, processing portion 32D analyzes the setting information, generates a variable list in which variables to be used by control program 227 are registered based on a result of analysis, and transfers the variable list to support apparatus 200 (steps S40, S41, and S42). Web browser 23D shows a screen 171 of the variable list received from Web server 31D at display portion 208, accepts a user operation 209 to select one or more variables from the variable list, and transfers a selection instruction based on the user operation to Web server 31D (steps S43, S44, and S45). In the present embodiment, designation of the one or more variables selected by the user is referred to as communication setting for generation of structure information 180.

Web server 31D generates structure information 180 (for example, an XML file) including one or more variables indicated by the selection instruction and transfers the structure information to Web browser 23D (steps S46 and S47). UPG developer 230 of support apparatus 200 generates a collection program 189 and loads generated collection program 189 to CPU unit 10A (steps S48 and S49). Collection program 189 is an exemplary UPG.

More specifically, UPG developer 230 analyzes structure information 180 transferred from Web server 31D and defines structure type 181 based on a result of analysis. The variable (member variable) that configures structure type 181 has the variable of the array type. This array type variable defines the member variable (each variable selected by the user) that configures structure information 180 with the array. UPG developer 230 creates collection program 189 that refers to structure type 181 based on the user operation. Structure type 181 is defined for collection program 189, and collection program 189 includes a program code including the variable having the data type of structure type 181, instructions to collect data of each member variable (each variable defined by an element of the array type) held by the structure type variable, and instructions to transfer the collected data to data collection unit 10D.

CPU unit 10A executes collection program 189 and transfers data (process data of sensor 5) set to each member variable of the structure type variable to data collection unit 10D (steps S50, S51, and S52). Data collection unit 10D is configured to output to the outside, data transferred from CPU unit 10A (that is, the process data of sensor 5 indicated by each member variable included in the variable having structure type 181), by using structure type 181 of collection program 189, in response to an access request from the outside (step S53). Data collection unit 10D may thus play a role as the relay between sensor 5 and one or more external devices.

CPU unit 10A executes collection program 189 in synchronization with a cycle of execution of control program 227 or refresh program 228 in processing cycle 61 in Fig. 6. Collection program 189 may set, for example, data stored at address 110 or address 111 in memory area 113 in refresh in Fig. 6 to each member variable of the structure type variable.

Processing portion 32D of Web server 31D outputs data on the variable transferred from CPU unit 10A (step S53). This output may include processing for processing portion 32D to cause Web browser 23D to show data on the variable, to log the data, or to transfer the data to a prescribed device (for example, a monitoring server).

### <K. Example Where Web Browser Generates Structure Information>

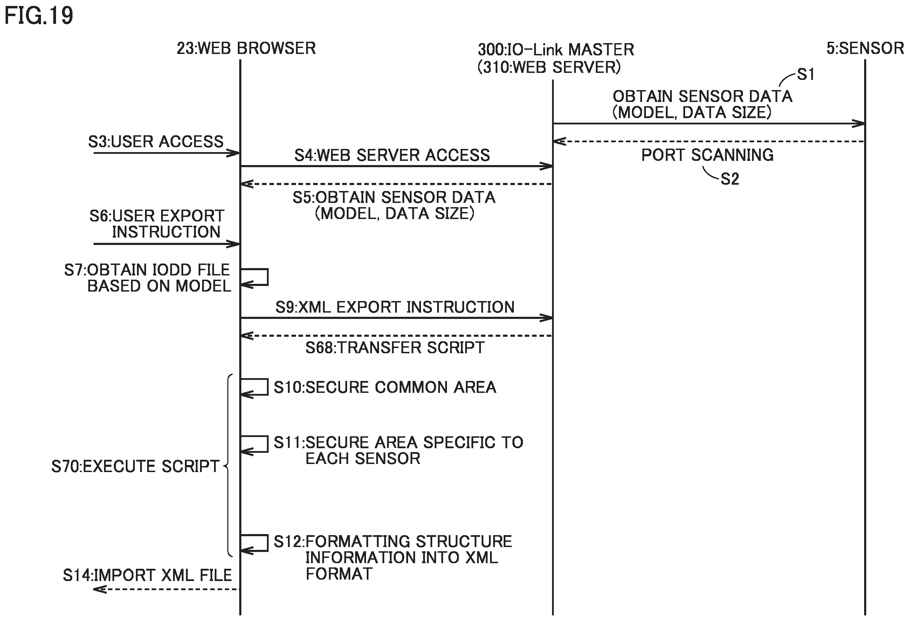

Fig. 19 is a diagram showing another sequence of generation of the structure information according to the present embodiment. Web server 310 may generate structure information 220 by using Web browser 23 as shown in Fig. 19.

Referring to Fig. 19, since processing in steps S1 to S7 and S9 is similar to processing in Fig. 9, description will not be repeated. Web server 310 generates a script indicating a command for causing Web browser 23 to generate structure information 220. Web server 310 transfers the script to Web browser 23 and Web browser 23 executes the script to generate structure information 220 (steps S68 and S70), converts generated structure information 220 into the XML file, and imports the XML file to UPG developer 230 (step S14). In step S70, processing as in steps S10, S11, and S12 in Fig. 9 is performed and structure information 220 is generated. Processing thus performed by Web server 310 to generate structure information 220 includes generating instructions (script instructions) for causing Web browser 23 to generate structure information 220.

### <L. Exemplary UI Screen>

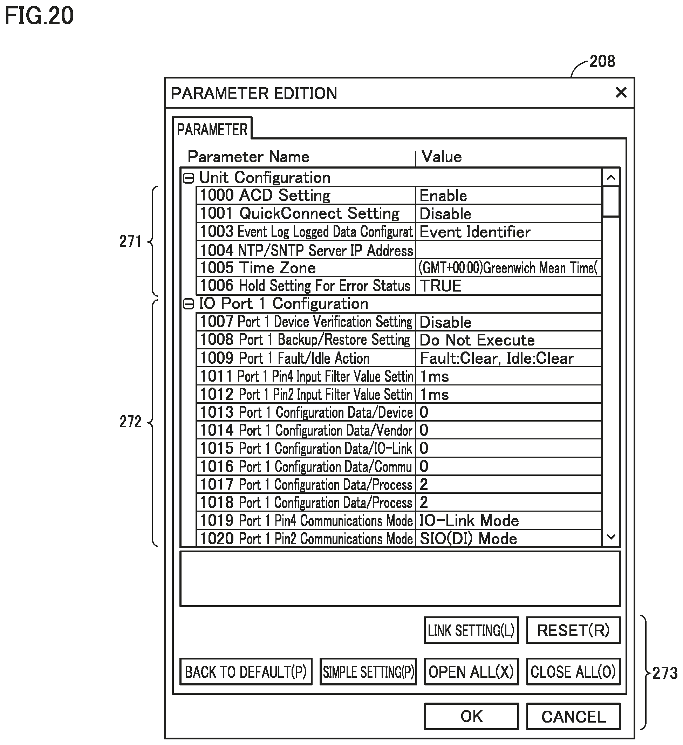

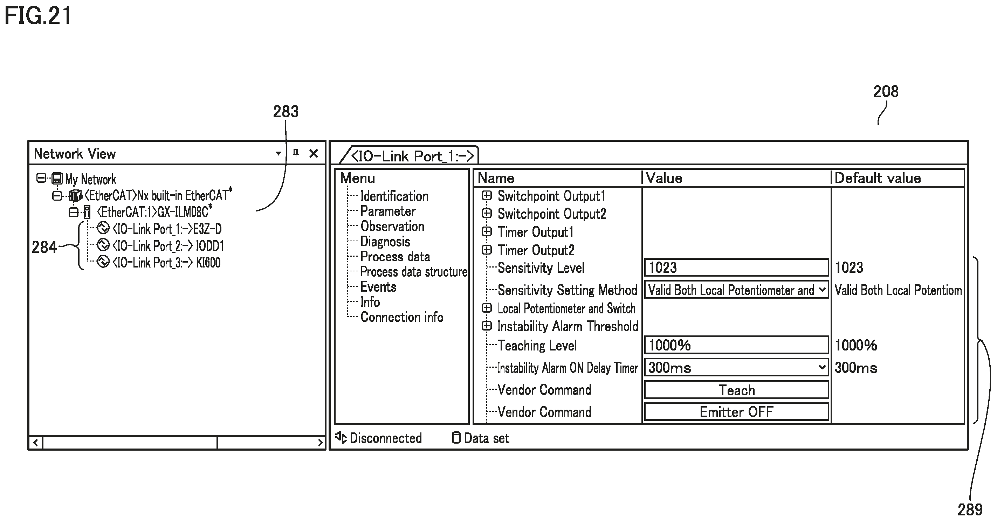

Figs. 20 and 21 are each a diagram showing an exemplary UI screen for setting according to the present embodiment. Fig. 20 shows an exemplary UI screen outputted by Web browser 23 for tag communication setting 340 corresponding to network 2 to IO-Link master 300 and Fig. 21 shows an exemplary UI screen outputted by Web browser 32 for IO-Link setting 28 of sensor 5 which is the IO-Link device.

The UI screen in Fig. 20 includes a setting portion 271 that accepts tag communication setting 340 of IO-Link master 300, a setting portion 272 that accepts IO-Link setting 28 for each port of IO-Link master 300, and an operation portion 273 that accepts a user operation for setting. Setting portion 272 for one port is shown in the UI screen in Fig. 20. IO-Link master 300, however, includes eight ports, and hence setting portion 272 is actually shown such that setting for each of eight ports can be made. The UI screen in Fig. 21 includes an identifier 283 of IO-Link master 300 for which setting is to be made, identifiers 284 of three sensors 5 connected to IO-Link master 300, and a setting portion 289 that accepts a setting operation from the user. In the UI screen in Fig. 21, the user can set the format corresponding to each sensor 5 in setting portion 272 in Fig. 20. The user can set the format of master common portion 123A in Fig. 8 and sensor specific portion 123B where data specific to sensor 5 is stored, by using the UI screens in Figs. 20 and 21.

### <M. Program>

A program such as the Web browser executed in IO-Link master 300 or data collection unit 10D is stored in a storage medium provided in these devices in a non-transitory manner. The program is stored in the storage medium by being transferred from support apparatus 200 or over network 2 or the like. Alternatively, the program is distributed as being stored in a not-shown recording medium such as a CD-ROM. The program stored in this CD-ROM is read from the CD-ROM and stored in a storage medium of a device.

An exemplary configuration in which a necessary module is provided as a module provided by IO-Link master 300 or data collection unit 10D by execution of a program by a processor is shown. A part or the entirety of these provided modules, however, may be implemented by using dedicated hardware circuitry (for example, an ASIC, an FPGA, or the like).

### <N. Additional Aspects>

The present embodiment as described above includes technical concepts as below.

### [Configuration 1]

A data relay device (300, 10D) in a factory automation (FA) system (1000) includes
an interface (301) for communication with a controller (100, 10A) that executes a user program (189, 227) that relates to control of one or more pieces of equipment (5) connected to a network (3) of the FA system,
a processing portion (320, 32D) that performs at least one of relay, collection, processing, or output of data that is transferred over the network, includes process data of the equipment, and relates to the control, in accordance with setting (28, 340) of communication between the controller and the one or more pieces of equipment (5), and
a generator (330, 33D) that performs processing for generating structure information (220, 180) that can be referred to in creation of the user program and includes information on the setting of communication, based on the setting of communication.

### [Configuration 2]

The data relay device described in Configuration 1 includes a Web server (310, 31D) that implements at least one of the processing portion or the generator.

### [Configuration 3]

In the data relay device described in Configuration 2,
the Web server communicates with a Web browser (23, 23D), and
the processing performed by the generator includes generation of a command that causes the Web browser to generate the structure information that can be referred to in creation of the user program and includes information on the setting of communication, based on the setting of communication.

### [Configuration 4]

The data relay device described in Configuration 3 communicates data in accordance with a first communication protocol, with the controller through the interface,
each of the one or more pieces of equipment transfers data in accordance with a second communication protocol over the network, and
the setting of communication includes setting based on the first communication protocol and setting based on the second communication protocol.

### [Configuration 5]

In the data relay device described in Configuration 4,
the setting based on the first communication protocol includes a first format (123A) of data communicated in the first communication protocol and the setting based on the second communication protocol includes a second format (123B, 123C) of data communicated in the second communication protocol.

### [Configuration 6]

The data relay device described in Configuration 5 further includes one or more ports (P1 to P8),
the one or more ports are configured to communicate with the one or more pieces of equipment over the network, and
the structure information includes
   information of the first format of data transferred between the data relay device and the controller, and
   for each of the one or more pieces of equipment connected to the one or more ports, information of the second format of data transferred by the equipment over the network.

### [Configuration 7]

In the data relay device described in Configuration 6,
the information of the first format or the information of the second format includes a size of data and an identifier of the data, or
the information of the first format or the information of the second format includes a configuration including the size of the data and the identifier of the data.

### [Configuration 8]

In the data relay device described in any one of Configurations 4 to 7,
the first communication protocol includes a tag data link and the second communication protocol includes an IO-Link.

### [Configuration 9]

In the data relay device described in any one of Configurations 1 to 8,
the structure information includes extensible markup language (XML) information described in the XML, and
in creation of the user program, a structure type (131) to be referred to by the user program to be executed in the controller is generated from the XML information.

### [Configuration 10]

In the data relay device described in Configuration 9,
a member variable that configures the structure type includes a member valuable of an array type (132), and
the array type defines an array (132B) that has data to be transferred over the network by each of the one or more pieces of equipment as an element.

### [Configuration 11]

In the data relay device described in Configuration 10,
the generator generates a function (135) that receives a variable of the structure type as input.

### [Configuration 12]

In the data relay device described in Configuration 10,
the generator generates a function (135) that receives a variable of the structure type as input and outputs data set to one or more member variables of the variable of the structure type.

### [Configuration 13]

In the data relay device described in any one of Configurations 1 to 12,
the generator assigns to the structure information, an identifier (13A, 13B) that allows distinction from another piece of the structure information.

### [Configuration 14]

In the data relay device described in Configuration 7,
when a port to which a relay (51) that connects a plurality of pieces of equipment is connected is detected from among the one or more ports, the generator generates the structure information to have a nested structure (220-1), and
the nested structure represents the structure information that is generated by the generator based on setting of communication between the controller and each piece of equipment connected to the relay and can be referred to in creation of the user program.

### [Configuration 15]

In the data relay device described in Configuration 3,
the setting of communication includes setting for specifying data of at least one piece of equipment with which the controller exchanges the data, among the one or more pieces of equipment.

### [Configuration 16]

The data relay device described in any one of Configurations 9 to 12 further includes
means for performing transfer processing for transferring a frame to the controller,
a plurality of ports configured such that the equipment is connectable thereto over the network, and
means for detecting, for each of the plurality of ports, change of equipment connected to that port to another piece of equipment,
each field that configures the frame is associated in prescribed one-to-one relation with a port to which equipment that transfers data to be stored in the field is connected,
each field that configures the frame is associated in one-to-one relation with a member variable that configures the structure type, for which data stored in the field is set, and
the transfer processing includes
   specifying, when the change is detected, a port to which the another piece of equipment has been connected before detection of the change, and
   storing data transferred from the another piece of equipment to the port at which the change has been detected, in the field of the frame associated with the specified port in the prescribed relation.

### [Configuration 17]

The data relay device described in any one of Configurations 1 to 16 further includes
a storage (305) where the structure information that can be referred to in creation of the user program is stored,
a plurality of ports (P1 to P8) configured such that the equipment is connectable thereto over the network,
means for obtaining, for each of the one or more ports to which the equipment is connected among the plurality of ports, an identifier of the equipment, and
means for detecting, for at least one port of the plurality of ports, change of equipment connected to that port to another piece of equipment,
the structure information stored in the storage includes, in association with each of the one or more ports, an identifier of the equipment obtained for that port, and
when the change is detected, the data relay device
   specifies a port to which the another piece of equipment has been connected before detection of the change, and
   changes the structure information stored in the storage in such a manner that an identifier of the another piece of equipment is associated with the specified port.

### [Configuration 18]

A method of relaying data in a factory automation (FA) system (1000) includes
communicating with a controller (100, 100A) that executes a user program (189, 227) that relates to control of one or more pieces of equipment connected to a network (3) of the FA system,
performing at least one of relay, collection, processing, or output of data that is transferred over the network, includes process data of the equipment, and relates to the control, in accordance with setting (20, 340) of communication between the controller and the one or more pieces of equipment, and
performing processing for generating structure information (220, 180) that can be referred to in creation of the user program and includes information on the setting of communication, based on the setting of communication.

### [Configuration 19]

A program causes a computer (300, 10D) that relays data in a factory automation (FA) system (1000) to perform
communicating with a controller (100, 10A) that executes a user program (189, 227) that relates to control of one or more pieces of equipment (5) connected to a network (3) of the FA system,
performing at least one of relay, collection, processing, or output of data that is transferred over the network, includes process data of the equipment, and relates to the control, in accordance with setting of communication between the controller and the one or more pieces of equipment, and
performing processing for generating structure information (220, 180) that can be referred to in creation of the user program and includes information on the setting of communication, based on the setting of communication.

Though an embodiment of the present invention has been described, it should be understood that the embodiment disclosed herein is illustrative and non-restrictive in every respect. The scope of the present invention is defined by the terms of the claims and is intended to include any modifications within the scope and meaning equivalent to the terms of the claims.

## Claims

1. A data relay device (300, 10D) that relays data in a factory automation (FA) system (1000), the data relay device comprising:
an interface (301) for communication with a controller (100, 10A) that executes a user program (189, 227) that relates to control of one or more pieces of equipment (5) connected to a network (3) of the FA system;
a processing portion (320, 32D) that performs at least one of relay, collection, processing, or output of data that is transferred over the network, includes process data of the equipment, and relates to the control, in accordance with setting (28, 340) of communication between the controller and the one or more pieces of equipment (5); and
a generator (330, 33D) that performs processing for generating structure information (220, 180) that can be referred to in creation of the user program and includes information on the setting of communication, based on the setting of communication.

2. The data relay device according to claim 1, comprising a Web server (310, 31D) that implements at least one of the processing portion or the generator.

3. The data relay device according to claim 2, wherein
the Web server communicates with a Web browser (23, 23D), and
the processing performed by the generator includes generation of a command that causes the Web browser to generate the structure information that can be referred to in creation of the user program and includes information on the setting of communication, based on the setting of communication.

4. The data relay device according to any one of claims 1 to 3, wherein
the data relay device communicates data in accordance with a first communication protocol, with the controller through the interface,
each of the one or more pieces of equipment transfers data in accordance with a second communication protocol over the network,
the setting of communication includes setting based on the first communication protocol and setting based on the second communication protocol, and
the first communication protocol includes a tag data link and the second communication protocol includes an IO-Link.

5. The data relay device according to claim 4, further comprising one or more ports (P1, P2, P3, P4, P5, P6, P7, P8), wherein
the setting based on the first communication protocol includes a first format (123A) of data communicated in the first communication protocol and the setting based on the second communication protocol includes a second format (123B, 123C) of data communicated in the second communication protocol,
the one or more ports are configured to communicate with the one or more pieces of equipment over the network, and
the structure information includes
information of the first format of data transferred between the data relay device and the controller, and
for each of the one or more pieces of equipment connected to the one or more ports, information of the second format of data transferred by the equipment over the network.

6. The data relay device according to claim 5, wherein
the information of the first format or the information of the second format includes a size of data and an identifier of the data, or
the information of the first format or the information of the second format includes a configuration including the size of the data and the identifier of the data.

7. The data relay device according to any one of claims 1 to 6, wherein
the structure information includes extensible markup language (XML) information described in the XML, and
in creation of the user program, a structure type (131) to be referred to by the user program to be executed in the controller is generated from the XML information.

8. The data relay device according to claim 7, wherein
a member variable that configures the structure type includes a member variable of an array type (132), and
the array type defines an array (132B) that has data to be transferred over the network by each of the one or more pieces of equipment as an element,
the generator
generates a function (135) that receives a variable of the structure type as input, and/or
generates a function (135) that receives a variable of the structure type as input and outputs data set to one or more member variables of the variable of the structure type.

9. The data relay device according to any one of claims 1 to 8, wherein
the generator assigns to the structure information, an identifier (13A, 13B) that allows distinction from another piece of the structure information.

10. The data relay device according to any one of claims 1 to 9, wherein
when a port to which a relay (51) that connects a plurality of pieces of equipment is connected is detected from among the one or more ports, the generator generates the structure information to have a nested structure (220-1), and
the nested structure represents the structure information that is generated by the generator based on setting of communication between the controller and each piece of equipment connected to the relay (51) and can be referred to in creation of the user program.

11. The data relay device according to any one of claims 1 to 10, wherein
the setting of communication includes setting for specifying data of at least one piece of equipment with which the controller exchanges the data, among the one or more pieces of equipment.

12. The data relay device according to any one of claims 1 to 11, further comprising:
means for performing transfer processing for transferring a frame to the controller;
a plurality of ports configured such that the equipment is connectable thereto over the network; and
means for detecting, for each of the plurality of ports, change of equipment connected to that port to another piece of equipment, wherein
each field that configures the frame is associated in prescribed one-to-one relation with a port to which equipment that transfers data to be stored in the field is connected,
each field that configures the frame is associated in one-to-one relation with a member variable that configures the structure type, for which data stored in the field is set, and
the transfer processing includes
specifying, when the change is detected, a port to which the another piece of equipment has been connected before detection of the change, and
storing data transferred from the another piece of equipment to the port at which the change has been detected, in the field of the frame associated with the specified port in the prescribed relation.

13. The data relay device according to any one of claims 1 to 12, further comprising:
a storage (305) where the structure information that can be referred to in creation of the user program is stored;
a plurality of ports (P1, P2, P3, P4, P5, P6, P7, P8) configured such that the equipment is connectable thereto over the network;
means for obtaining, for each of the one or more ports to which the equipment is connected among the plurality of ports, an identifier of the equipment; and
means for detecting, for at least one port of the plurality of ports, change of equipment connected to that port to another piece of equipment, wherein
the structure information stored in the storage includes, in association with each of the one or more ports, an identifier of the equipment obtained for that port, and
when the change is detected, the data relay device
specifies a port to which the another piece of equipment has been connected before detection of the change, and
changes the structure information stored in the storage in such a manner that an identifier of the another piece of equipment is associated with the specified port.

14. A method of relaying data in a factory automation (FA) system (1000), the method comprising:
communicating with a controller (100, 100A) that executes a user program (189, 227) that relates to control of one or more pieces of equipment (5) connected to a network (3) of the FA system;
performing at least one of relay, collection, processing, or output of data that is transferred over the network, includes process data of the equipment, and relates to the control, in accordance with setting (20, 340) of communication between the controller and the one or more pieces of equipment; and
performing processing for generating structure information (220, 180) that can be referred to in creation of the user program and includes information on the setting of communication, based on the setting of communication.

15. A program that causes a computer (300, 10D) that relays data in a factory automation (FA) system (1000) to perform:
communicating with a controller (100, 10A) that executes a user program (189, 227) that relates to control of one or more pieces of equipment connected to a network (3) of the FA system;
performing at least one of relay, collection, processing, or output of data that is transferred over the network, includes process data of the equipment, and relates to the control, in accordance with setting of communication between the controller and the one or more pieces of equipment; and
performing processing for generating structure information (220, 180) that can be referred to in creation of the user program and includes information on the setting of communication, based on the setting of communication.
